(19) Europäisches Patentamt
European Patent Office
Office européen des brevets

(11) Veröffentlichungsnummer : **0 093 320**
**B1**

(12) # EUROPÄISCHE PATENTSCHRIFT

(45) Veröffentlichungstag der Patentschrift : **16.06.87**

(51) Int. Cl.⁴ : **C 02 F 1/26**

(21) Anmeldenummer : **83103830.2**

(22) Anmeldetag : **20.04.83**

(54) **Extraktion von Oniumsalzen aus Prozesswässern und Abwässern.**

(30) Priorität : **03.05.82 DE 3216383**

(43) Veröffentlichungstag der Anmeldung : **09.11.83 Patentblatt 83/45**

(45) Bekanntmachung des Hinweises auf die Patenterteilung : **16.06.87 Patentblatt 87/25**

(84) Benannte Vertragsstaaten : **AT BE CH DE FR GB IT LI NL SE**

(56) Entgegenhaltungen :
**DE-A- 1 642 392**
**CHEMICAL ABSTRACTS, Band 76, Nr. 14, 3. April 1972, Seite 346, Ref.Nr. 77226e und 77227f, Columbus, Ohio, US; N.A. GIBSON et al.: "Distribution of salts of large cations between water and organic solvents", II: Factors affecting the magnitude of the distribution ratio; I: Extraction of quaternary phosphonium and arsonium salts over a range of cation and anion concentrations;**

(73) Patentinhaber : **BAYER AG**
**Konzernverwaltung RP Patentabteilung**
**D-5090 Leverkusen 1 Bayerwerk (DE)**

(72) Erfinder : **Idel, Karsten, Dr.**
**Scheiblerstrasse 81**
**D-4150 Krefeld (DE)**
Erfinder : **Freitag, Dieter, Dr.**
**Hasenheide10**
**D-4150 Krefeld (DE)**
Erfinder : **Ostlinning, Edgar, Dr.**
**Rembrandtstrasse 37**
**D-4000 Düsseldorf (DE)**

**EP 0 093 320 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein Verfahren zur Entfernung von Oniumsalzen, besonders quartären Phosphoniumverbindungen und insbesondere quartären Ammoniumverbindungen, aus wäßrigen Systemen, die bei der Herstellung oder Verwendung dieser Oniumsalze anfallen.

Oniumsalze finden heute eine sehr vielfältige Anwendung, z. B. als Textilhilfsmittel, Desinfektionsmittel und als Phasentransferkatalysatoren.

Insbesondere die quartären Ammoniumsalze werden in der Textilindustrie als Textilweichmacher, Viskosezusatzmittel, Hilfsmittel für Naßechtheit oder beim Färben als Egalisiermittel bzw. Retarder und als Abzieh- und Ätzmittel eingesetzt. Ferner werden Textilien mit Hilfe von quartären Ammoniumsalzen antiseptisch und antistatisch eingestellt. In der kosmetischen Industrie und in der Medizin werden ebenfalls die bakteriziden, germiziden und fungiziden Eigenschaften der quartären Ammoniumsalze für Kosmetika und Desinfizienta benutzt. Neben dem Einsatz als Flotationshilfsmittel z. B. in der Kalisalzgewinnung und als Netzmittel in der Erdölgewinnung sowie als Emulgatoren bei Polymerisationen, werden Oniumsalze allgemein und besonders quartäre Ammoniumsalze und Phosphoniumsalze als hochwirksame sogenannte Phasentransferkatalysatoren eingesetzt. Mit Hilfe der Phasentransferkatalyse können eine Vielzahl von organischen Reaktionen wie Substitutions-, Eliminierungs-, Oxidations- und Reduktions-, Wittig- und Aldolreaktionen deutlich beschleunigt werden. Besonders hervorzuheben ist der rasche hochmolekulare Aufbau bei Polykondensationen im Phasengrenzflächenverfahren, wobei wertvolle thermoplastische Kunststoffe wie Polycarbonate und Polyester erhalten werden.

Die bakterizide Wirkung insbesondere der quartären Ammonium- und Phosphoniumverbindungen wirkt sich jedoch allgemein nachteilig dann aus, wenn Abwässer, die von der Herstellung oder Verwendung her quartäre Ammoniumsalze enthalten, in biologische Kläranlagen gelangen. Es besteht dann die Gefahr, daß die Bakterienkulturen der Kläranlagen entscheidend geschädigt bzw. abgetötet werden können. Wenn überhaupt, so ist nur ein sehr langsamer und unvollständiger Abbau von quartären Ammoniumverbindungen in biologischen Kläranlagen zu erwarten. Vom Gesetzgeber ist jedoch ein Abbau vorgeschrieben. Es wäre also wünschenswert, solche abbauinerten Oniumverbindungen vor der Einschleusung in die Kläranlage aus dem Abwasser zu entfernen.

Es wurde nun überraschenderweise gefunden, daß durch Zugabe von Phenolen bzw. deren Salze zusammen mit einem nicht mit Wasser mischbaren Lösungsmittel quartäre Ammonium- und/oder Phosphoniumverbindungen aus wäßrigen Lösungen leicht extrahiert und in die organische Phase überführt werden können. Die auf diese Weise von den Oniumsalzen befreiten wäßrigen Systeme können dann ohne Probleme in biologische Kläranlagen eingeleitet und anschließend in das Abwassernetz eingespeist werden. Für das erfindungsgemäße Verfahren eignen sich sowohl Monophenole als auch Di-, Tri- und Polyphenole. Insbesondere sind solche Phenole geeignet, die Alkylreste tragen, wobei die Phenole jedoch nicht so stark emulgierend wirken sollten, daß eine nachträgliche Phasentrennung erschwert ist.

Bei Monophenolen handelt es sich um Phenole der allgemeinen Formel 1

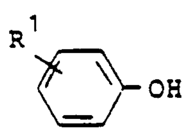

wobei $R_1$ bevorzugt in meta- oder para-Stellung stehen kann und einen $C_1$-$C_{18}$-Alkyl oder Cycloalkylrest, einen $C_6$-$C_{24}$-Aryl-, Alkaryl- oder Aralkylrest bedeutet. Der Rest $R_1$ kann Substituenten tragen und geradkettig oder verzweigt sein. Außerdem kann $R_1$ funktionelle Gruppierungen, wie z. B. Ether-, Thioether-, Keto-, Epoxy-Gruppen, Halogene und/oder heterocyclische Ringe beinhalten oder als Substituenten tragen. Es können auch mehrere Reste $R_1$ am Aromaten fixiert sein, jedoch ist eine ortho-Disubstitution des Phenols nicht so günstig. Erfindungsgemäß können z. B. folgende Phenole eingesetzt werden :

3-Methylphenol
4-Methylphenol
3-Ethylphenol
4-Ethylphenol
3-n-Propylphenol
4-n-Propylphenol
3-n-Butylphenol
4-n-Butylphenol
3-tert.-Butylphenol
4-tert.-Butylphenol
3-n-Pentylphenol
4-n-Pentylphenol

4-n-Isopentylphenol
4-n-Hexylphenol
4-Isohexylphenol
4-Cyclohexylphenol
2-Methyl-4-cyclohexylphenol
4-n-Heptylphenol
4-Isoheptylphenol
4-n-Octylphenol
4-Isooctylphenol
4-n-Nonylphenol
4-Isononylphenol
4-n-Decylphenol
4-Isodecylphenol
n-Undecylphenol
n-Dodecylphenol
Isodecylphenol
n-Tetradecylphenol
n-Stearylphenol
4-Phenylphenol
4-Tolylphenol
4-(2-Ethoxyethyl)-phenol
4-(2-Propoxyethyl)-phenol
4-(3-Ethoxypropyl)-phenol
4-Butoxy-phenol
4-(2-Ethoxybutoxy)-phenol
4-(2-Ethoxyhexyl)-phenyl
4-Mercaptobutyl-phenol
4-(1-Acetylethyl)-phenol
4-(1-Acetylbutyl)-phenol

Bevorzugt sind Phenole, die einen gegebenenfalls substituierten $C_4$-$C_{12}$-Rest $R_1$ gemäß Formel 1 tragen.

Besonders bevorzugt sind

4-tert.-Butylphenol
4-Isooctylphenol
4-n-Decylphenol
4-Isodecylphenol
4-n-Decylphenol
4-Cyclohexylphenol

Als Bisphenole kommen solche in Frage, die den allgemeinen Formeln 2 und 3 entsprechen.

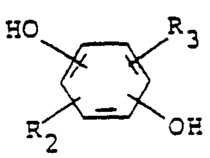

(2)

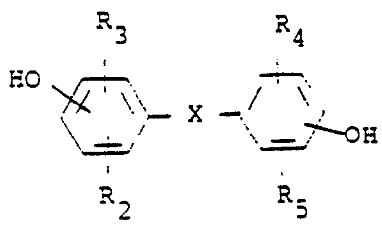

(3)

in denen

$R_2$, $R_3$, $R_4$ und $R_5$ gleich oder verschieden sein können und für Wasserstoff einen $C_1$- bis $C_{12}$-Alkyl- oder Cycloalkylrest, der gegebenenfalls substituiert sein kann, für Halogen wie z. B. Brom und Chlor

stehen und X eine Einfachbindung, einen $C_2$- bis $C_{18}$-Alkylen- oder Cycloalkylenrest, einen $C_1$- bis $C_{18}$-Alkyliden- oder Cycloalkylidenrest, einen heterocyclischen Rest, der auch an einen oder beide aromatischen Kerne ankondensiert sein kann, ein bicyclisches Ringsystem wie z. B. der Norbornylidenrest, eine funktionelle Gruppe wie Norbornylidenrest, eine funktionelle Gruppe wie

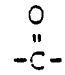

—O—, —S—, —SO—, —$SO_2$— oder einen Rest der allgemeinen Formeln 4a und 4b bedeutet.

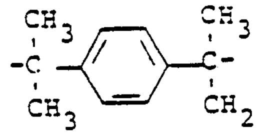

(4a)

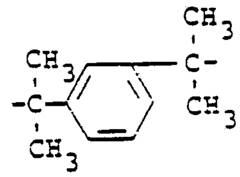

(4b)

Beispielsweise können folgende Bisphenole Verwendung finden :

2,2-Bis-(4-hydroxyphenyl)-propan
1,1-Bis-(4-hydroxyphenyl)-cyclohexan
2,2-Bis-(4-hydroxyphenyl)-butan
2,2-Bis-(4-hydroxyphenyl)-pentan
2,2-Bis-(4-hydroxyphenyl)-hexan
2,2-Bis-(4-hydroxyphenyl)-octan
2,2-Bis-(4-hydroxyphenyl)-decan
2,2-Bis-(4-hydroxyphenyl)-dodecan
2,2-Bis-(4-hydroxyphenyl)-hexadecan
2,2-Bis-(4-hydroxyphenyl)-octadecan
2,2-Bis-(3-chlor-4-hydroxyphenyl)-propan
2,2-Bis-(3-methyl-4-hydroxyphenyl)-propan
2,2-Bis-(3-methyl-4-hydroxyphenyl)-cyclohexan
2,2-Bis-(3-methyl-4-hydroxyphenyl)-dodecan
2,2-Bis-(3-methyl-4-hydroxyphenyl)-hexadecan
2,2-Bis-(3,5-dimethyl-4-hydroxyphenyl)-propan
4,4'-Dihydroxydiphenylether
4,4'-Dihydroxydiphenylthioether
α,α-Bis-(4-hydroxyphenyl)-p-diisopropylbenzol
2,2-Bis-(4-hydroxyphenyl)-norbornan
1,1,3,4,6-Pentamethyl-3-(3,5-dimethyl-4-hydroxyphenyl)-indan-5-ol

Bevorzugt werden Bisphenole mit höherem aliphatischen Anteil eingesetzt.

Es können auch Triphenole, Tetraphenole sowie allgemein Polyphenole Verwendung finden, so z. B. 2,4-Bis-(4-hydroxyphenylisopropyl)-phenol und 1,4-Bis-(4,4'-dihydroxytriphenyl-methyl)-benzol, 1,1,4,4-Tetra-(4-hydroxyphenyl)-cyclohexan.

Für die erfindungsgemäße Extraktion geeignet sind Oniumsalze, insbesondere quartäre Phosphoniumsalze und ganz besonders quartäre Ammoniumsalze. Bei den extraktionsfähigen quartären Ammoniumsalzen kann das Stickstoffatom sowohl in offenkettigen als auch cyclischen Systemen vorliegen. Die am Stickstoff befindlichen Reste R können gleich oder verschieden sein und einen $C_1$-$C_{18}$-Alkyl- oder Cycloalkyl-, und/oder einen $C_6$-$C_{24}$-Aryl-, Alkaryl- oder Aralkylrest bedeuten. Es können auch jeweils zwei Reste R zu einem Ring verbunden sein, so daß sie mit dem Stickstoffatom ein heterocyclisches System bilden. Es können auch mehrere quartäre Ammoniumverbindungen durch z. B. Alkylengruppen miteinander verbunden sein. Die am Stickstoff befindlichen Reste R können gegebenenfalls substituiert sein. Beispielsweise geeignet sind solche quartäre Ammoniumsalze mit 4 bis 72 C-Atomen und 1 bis 3 N-Atomen :

Tetramethylammoniumbromid

Tetraethylammoniumchlorid
Tetraethylammoniumbromid
Tetra-n-propylammoniumbromid
Tetra-n-butylammoniumbromid
Tetra-n-butylammoniumjodid
Tetra-n-hexylammoniumbromid
Tetra-n-octylammoniumbromid
Tetra-n-decylammoniumbromid
Trioctyl-methyl-ammoniumsulfat
Trioctyl-methyl-ammoniumjodid
N-Methyl-N-decylmorpholiniumbromid
N-Methyl-N-butylmorpholiniumbromid
N-Methyl-N-octylmorpholiniumbromid
N-Methyl-N-cetylmorpholiniumbromid
N-Methyl-N-benzylmorpholiniumbromid
N-Methyl-N-benzylmorpholiniumchlorid
N-Methyl-N-ethylmorpholiniumbromid
N-Methyl-N-ethylpyrrolidiniumbromid
N-Methyl-N-butylpyrrolidiniumbromid
N-Methyl-N-cetylpyrrolidiniumbromid
N-Methyl-N-octylpyrrolidiniumbromid
N-Methyl-N-benzylpyrrolidiniumchlorid
N-(2-Hydroxyethyl)-N-ethylpiperidiniumbromid
N-(2-Hydroxyethyl)-N-butylpiperidiniumbromid
N-(2-Hydroxyethyl)-N-octylpiperidiniumbromid
N-(2-Hydroxyethyl)-N-benzylpiperidiniumchlorid
Tripropylhexylammoniumbromid
Tripropylcetylammoniumbromid
N-Ethyl-N-butyl-piperodiniumbromid
Tricyclohexylethylammoniumbromid
Benzyltributylammoniumbromid
Benzyltrimethylammoniumchlorid
Hexadecylpiperidiniumchlorid
Hexadecyltrimethylammoniumbromid
Phenyltrimethylammoniumbromid
Tetrabutylammoniumhydrogensulfat
Tetraethylammoniumhydrogensulfat
Tetraethylammonium-4-toluolsulfonat
Tetradecylammoniumperchlorat
Tricaprylmethylammoniumbromid
Dimethyl-triethylendiammoniumbromid

Bei den extraktionsfähigen quartären Phosphoniumsalzen kann das Phosphoratom sowohl in offenkettigen als auch cyclischen Systemen vorliegen. Die am Phosphor befindlichen Reste R können gleich oder verschieden sein und haben die gleiche Bedeutung wie die Reste R der quartären Ammoniumsalze. Es können mehrere quartäre Phosphoniumsalze z. B. durch Alkylengruppen miteinander verbunden sein. Die am Phosphor befindlichen Reste R können gegebenenfalls substituiert werden. Beispielsweise geeignet sind solche quartären Phosphoniumsalze mit 4 bis 72 C-Atomen und 1 bis 3 P-Atomen :

Tetramethylphosphoniumbromid
Tetraethylphosphoniumchlorid
Tetraethylphosphoniumbromid
Tetra-n-propylphosphoniumbromid
Tetra-n-butylphosphoniumbromid
Tetra-n-butylphosphoniumjodid
Tetra-n-hexylphosphoniumbromid
Tetra-n-octylphosphoniumbromid
Tetra-n-decylphosphoniumbromid
Tri-n-decyl-methyl-phosphoniumbromid
Tri-phenyl-cetyl-phosphoniumbromid
Tri-phenyl-benzyl-phosphoniumbromid
Tri-phenyl-methyl-phosphoniumbromid
Tri-phenyl-ethyl-phosphoniumchlorid
Tri-phenyl-butyl-phosphoniumbromid

Als inerte, nicht mit Wasser mischbare organische Phase, mit der in Kombination mit den erfindungsgemäßen Phenolen die quartäre Ammonium- und/oder Phosphoniumsalze aus wäßrigen Systemen extrahiert werden, dienen bekannte Lösungsmittel, wie z. B. Benzol, Toluol, Xylol, Ethylacetat, chlorierte aliphatische Kohlenwasserstoffe wie Methylenchlorid, Chloroform und 1,2-Dichlorethan und chlorierte aromatische Kohlenwasserstoffe wie Chlorbenzol, Dichlorbenzol, Chlortoluol und Chlorxylol.

Das Verhältnis der Volumina der organischen nicht mit Wasser mischbaren Phase zur wäßrigen Phase sollte für jedes quartäre Ammonium- und/oder Phosphoniumsalze im einzelnen ermittelt werden. Es hängt darüber hinaus von der Zeit und der Intensität der Vermischung beider Phasen ab. Das Verhältnis der Volumina der organischen zur wäßrigen Phase kann zwischen 1 : 25 und 10 : 1 liegen. Falls erforderlich kann unter Druck und bei erhöhten Temperaturen zwischen 20 °C und 200 °C, bevorzugt zwischen 20 °C und 100 °C extrahiert werden. Die Vermischungszeit der wäßrigen mit dem Oniumsalz bekannten Phase und der organischen Phase plus Phenol kann zwischen 0,1 und 1 800 sec liegen. Der Übergang der quartären Ammonium- und Phosphoniumsalze in die organische Phase erfolgt im allgemeinen rasch, so daß die Vermischungszeiten im unteren Bereich des oben angegebenen Zeitintervalls liegen. Das molare Verhältnis von quartären Ammonium- bzw. Phosphoniumsalz zu Phenol liegt zwischen 1 : 1 bis 1 : 100 bevorzugt 1 : 1 bis 1 : 25. Der pH-Wert der wäßrigen Phase sollte neutral bis basisch sein. Die Extraktion selbst kann in den gängigen Systemen, z. B. Mischer-Scheider-Systemen erfolgen. Im Abwasser häufig befindliche Salze wie Chloride und Sulfate wirken nicht nachteilig, sondern begünstigen sogar die Entfernung der Oniumsalze aus der wäßrigen Phase, Organophile Phenole insbesondere solche mit längeren Alkylketten zeigen die beste Extraktionswirkung. Sie gehen zusammen mit dem genannten Anteil an quartären Ammoniumsalz- bzw. Phosphoniumsalze nahezu quantitativ in die organische Phase über und können dort zurückgewonnen werden. Durch z. B. Destillation der organischen Phase nach Extraktion kann somit das organische Lösungsmittel, die Phenolkomponente und das quartäre Ammonium- bzw. Phosphoniumsalz zurückgewonnen werden. Organisches Lösungsmittel und Phenolkomponente können dann wieder erfindungsgemäß eingesetzt werden, und zusätzlich zur Entfernung der nicht abbaubaren Oniumsalze aus dem Abwasser besteht. die Möglichkeit der Rückgewinnung der teilweise wertvollen quartären Ammonium- bzw. Phosphoniumsalze.

## Beispiele

### Beispiel 1

In einem Versuch außerhalb des Rahmens dieser Erfindung werden 880 g einer wäßrigen Lösung, die 352 ppm Tetra-n-butylammoniumbromid (TBAB) (1,1 m Mol) enthält, mit 880 g Methylenchlorid versetzt. Beide Phasen werden 20 Minuten intensiv vermischt. Danach wird die wäßrige Phase abgetrennt und die Menge TBAB bestimmt.

Nach Extraktion ist nur ein geringer Teil TBAB in die Methylenchloridphase übergegangen. 315 ppm TBAB verbleiben in der wäßrigen Phase, nur 37 ppm TBAB sind extrahiert worden.

### Beispiel 2

Wie in Beispiel 1 werden 880 g einer wäßrigen Lösung mit 352 ppm Tetra-n-butylammoniumbromid (TBAB) (1,1 m Mol) vorgelegt. Zusätzlich werden 1,66 g einer 45 %igen Natronlauge (18,75 mMol NaOH) und 3,83 g (18,75 mMol) p-Isooctylphenol hinzugegeben und mit 880 g Methylenchlorid 20 Minuten intensiv vermischt. Nach der Phasentrennung wird der Restgehalt TBAB in der wäßrigen Phase bestimmt : 5-6 ppm TBAB. Im Gegensatz zu Beispiel 1 ist das Oniumsalz fast quantitativ aus der wäßrigen Phase entfernt worden.

### Beispiel 3

Analog Beispiel 2, jedoch wird ein anderes Phenol eingesetzt. Anstelle von 3,83 g Isooctylphenol (18,75 mMol) werden 2,81 g p-tert.-Butylphenol (18,75 mMol) eingesetzt. Nach Trennung der Phasen sind nur noch 9 ppm Tetra-n-butylammoniumbromid (TBAB) in der wäßrigen Phase (vor der Extraktion 352 ppm TBAB) enthalten.

### Beispiel 4-8

Es wird die gleiche wäßrige Lösung mit 352 ppm Tetra-n-butylammoniumbromid (TBAB) wie in Beispiel 1 bis 3 eingesetzt. Gemäß Beispiel 2 wird ein molarer Überschuß, bezogen auf die Mole TBAB an p-Isooctylphenol (IOP)/NaOH zugesetzt und anschließend mit Methylenchlorid extrahiert. Unterschiedliche Molmengen p-Isooctylphenol (IOP)/NaOH, bezogen auf die Mole TBAB, zeigen eine unterschiedliche Wirksamkeit bezüglich der Extraktion des Oniumsalzes.

| Beispiel | Mol IOP/NaOH: Mol TBAB | ppm TBAB in der wäßrigen Phase vor | und nach Extraktion |
|---|---|---|---|
| 4 | 5 | 352 ppm | 98 ppm |
| 5 | 10 | 352 ppm | 29 ppm |
| 6 | 15 | 352 ppm | 10 ppm |
| 7 | 20 | 352 ppm | < 5 ppm |
| 8 | 25 | 352 ppm | < 5 ppm |

Extraktionszeit 20 Minuten. Gleiche Menge wäßrige und Methylenchloridphase.

Beispiel 9-13

Analog Beispiel 4-8. Jedoch wird anstelle von p-Isooctylphenol p-Cyclohexylphenol (CHP) eingesetzt.

| Beispiel | Mol CHP/NaOH Mol TBAB | ppm TBAB in der wäßrigen Phase vor | und nach Extraktion |
|---|---|---|---|
| 9 | 5 | 352 ppm | 178 ppm |
| 10 | 10 | 352 ppm | 47 ppm |
| 11 | 15 | 352 ppm | 11 ppm |
| 12 | 20 | 352 ppm | 6-5 ppm |
| 13 | 25 | 352 ppm | < 5 ppm |

Beispiel 13-17

Analog Beispiel 2. Jedoch wurden die Extraktionszeiten deutlich verringert. Wie Beispiel 13-16 zeigt, ist zwischen 20 Minuten und 1 Minute Vermischungszeit kein Unterschied in der Extraktionswirkung zu sehen. Auch bei nur 30 sec. Vermischungszeit ist die Extraktionswirkung kaum vermindert (Beispiel 17).

| Beispiel | Vermischungszeit | ppm TBAB in der wäßrigen phase vor | und nach Extraktion |
|---|---|---|---|
| 13 | 20 Min. | 352 ppm | < 5 ppm |
| 14 | 10 Min. | 352 ppm | < 5 ppm |
| 15 | 5 Min. | 352 ppm | < 5 ppm |
| 16 | 1 Min. | 352 ppm | < 5 ppm |
| 17 | 0,5 Min. | 352 ppm | 5-6 ppm |

Beispiel 18

1 000 g einer wäßrigen Lösung, die 820 ppm Tetra-n-decylammoniumbromid (TDAB) (1,24 mMol) enthält wird mit 1 000 g Methylenchlorid 5 Minuten extrahiert. Nach Phasentrennung verbleiben 765 ppm TBAB in der wäßrigen Phase.

Der Versuch wird wiederholt, jedoch werden vor der Extraktion 1,1 g (12,4 mMol) 45 %ige Natronlauge und 1,86 g (12,4 mMol) p-tert.-Butylphenol zugegeben. Nach Extraktion und Phasentrennung werden in wäßrigen Phasen nur noch 5 ppm TDAB gefunden.

Beispiel 19

Die wäßrige Lösung gemäß Beispiel 2, die 352 ppm Tetra-n-butylammoniumbromid (TBAB) enthält, wird mit 7,8 g einer 45 %igen Natronlauge (88 mMol) und 10,0 g Bisphenol A (Bis-(4-hydroxyphenyl)-propan-2,2) (44 mMol) versetzt und anschließend mit der gleichen Gewichtsmenge Methylenchlorid 20 Minuten ausgeschüttelt. Nach Phasentrennung sind nur < 5 ppm TBAB in der wäßrigen Phase.

Beispiel 20

Die Extraktion gemäß Beispiel 2 wird wiederholt. Anschließend wird der Anteil p-Isooctylphenol in der wäßrigen Phase, die nach Extraktion nur noch 5-6 ppm TBAB enthält, bestimmt : 7 ppm p-Isooctylphenol. Das Abwasser wird also nach Entfernen des Oniumsalzes nicht durch das im Sinne der Erfindung zudosierte p-Isooctylphenol belastet, da dies in der organischen Phase verbleibt.

Beispiel 21

1 000 g einer wäßrigen Lösung, die 550 ppm Triphenylbenzylphosphoniumchlorid (1,42 mMol) enthält werden durch Zugabe von 2,21 g (25 mMol) einer 45 %igen Natronlauge und 5,1 g (25 mMol) p-Isooctylphenol mit 1 000 g Methylenchlorid 1 Minute extrahiert. Nach Phasentrennung können in der wäßrigen Phase nur noch 7 ppm Triphenyl-benzylphosphoniumchlorid bestimmt werden.

**Patentansprüche**

1. Verfahren zur Extraktion von Oniumsalzen, bevorzugt quartäre Phosphoniumsalze aus wäßrigen Lösungen in eine nicht mit Wasser mischbare organische Gegenphase, dadurch gekennzeichnet, daß zusätzlich eine phenolische Komponente zugegeben wird.

2. Verfahren gemäß Anspruch 1, dadurch gekennzeichnet, daß die phenolische Komponente ein Monophenol, Bisphenol und ein Polyphenol mit bevorzugt 3 bis 4 phenolischen OH-Gruppen ist.

3. Verfahren gemäß Anspruch 1, dadurch gekennzeichnet, daß die phenolische Komponente ein Mono-, Bis-, Tris- oder Tetraphenol mit mindestens einem $C_4$-$C_{18}$-Alkylrest ist.

4. Verfahren gemäß Anspruch 1 bis 3, dadurch gekennzeichnet, daß ein pH-Wert von 6 bis 14 eingestellt wird.

5. Verfahren gemäß Anspruch 1 bis 4, dadurch gekennzeichnet, daß das Oniumsalz in einer Menge von 1 bis 100 Mol-%, bezogen auf die Mole der phenolischen Komponente, vorliegt.

6. Verfahren gemäß Anspruch 1 bis 5, dadurch gekennzeichnet, daß ein quartäres Phosphonium- und/oder quartäres Ammoniumsalz vorliegt.

**Claims**

1. Process for the extraction of onium salts, preferably quaternary phosphonium salts, from aqueous solutions into a water-immiscible organic antiphase, characterised in that a phenolic component is additionally added.

2. Process according to Claim 1, characterised in that the phenolic component is a monophenol, bisphenol and a polyphenol with preferably 3 to 4 phenolic OH groups.

3. Process according to Claim 1, characterised in that the phenolic component is a mono-, bis-, tri- or tetraphenol with at least one $C_4$-$C_{18}$-alkyl radical.

4. Process according to Claim 1 to 3, characterised in that a pH value of 6 to 14 is adjusted.

5. Process according to Claim 1 to 4, characterized in that the onium salt is present in a quantity of 1 to 100 mol %, based on the mols of the phenolic component.

6. Process according to Claim 1 to 5, characterised in that a quaternary phosphonium and/or quaternary ammonium salt is present.

**Revendications**

1. Procédé pour extraire des sels en onium, de préférence des sels de phosphonium quaternaires, de solutions aqueuses, dans une phase organique non miscible à l'eau, caractérisé en ce que l'on ajoute un composant phénolique.

2. Procédé selon la revendication 1, caractérisé en ce que le composant phénolique est un monophénol, un bisphénol ou un polyphénol portant de préférence 3 à 4 groupes OH phénoliques.

3. Procédé selon la revendication 1, caractérisé en ce que le composant phénolique est un mono-, bis-, tris- ou tétra-phénol contenant au moins un groupe alkyle en $C_4$-$C_{18}$.

4. Procédé selon les revendications 1 à 3, caractérisé en ce que l'on règle à un pH de 6 à 14.

5. Procédé selon les revendications 1 à 4, caractérisé en ce que le sel en onium est présent en quantités de 1 à 100 moles %, par rapport aux moles du composant phénolique.

6. Procédé selon les revendications 1 à 5, caractérisé en ce que l'on extrait un sel de phosphonium quaternaire et/ou d'ammonium quaternaire.